# EUROPÄISCHE PATENTSCHRIFT

(11) **EP 2 503 425 B1**
(45) Veröffentlichungstag und Bekanntmachung des Hinweises auf die Patenterteilung: **28.10.2020**
(21) Anmeldenummer: 12158787.7
(22) Anmeldetag: 09.03.2012
(51) Int. Cl.: G05D 9/12, B05C 11/10, F16B 11/00, G01F 23/26

(54) **Vorrichtung und Verfahren zur Steuerung/Regelung eines Füllstandsniveaus**
Method and device for controlling/regulating a fill level
Dispositif et procédé de commande/réglage d'un niveau de remplissage

(30) Priorität: 23.03.2011 DE 102011014888
(43) Veröffentlichungstag der Anmeldung: 26.09.2012
(73) Patentinhaber: HOMAG GmbH, 72296 Schopfloch (DE)
(72) Erfinder: Schmid, Johannes, 72181 Starzach (DE); Leopold, Stephan, 72348 Rosenfeld (DE)
(74) Vertreter: Hoffmann Eitle

(56) Entgegenhaltungen:
- DE-A1- 2 652 133
- DE-A1- 3 029 352
- DE-A1- 3 119 772
- US-A- 4 182 363
- US-A1- 2003 184 318
- Rechner Sensors: "KAPAZITIVE FÜLLSTANDSMESS- SYSTEME KFS-/ KFA", , 31. Mai 2010 (2010-05-31), XP055299978, Gefunden im Internet: URL:http://www.rechner.de/instanz/pdfs/kat -kfs-gl-de.pdf [gefunden am 2016-09-05]
- Anonymous: "Kapazitiver Sensor - Wikipedia", , 1 July 2010 (2010-07-01), XP055450055, Retrieved from the Internet: URL:https://de.wikipedia.org/w/index.php?t itle=Kapazitiver_Sensor&oldid=76187471 [retrieved on 2018-02-09]

## Beschreibung

Die vorliegende Erfindung betrifft eine Vorrichtung und ein Verfahren zur Steuerung/Regelung eines Füllstandsniveaus, insbesondere zur Steuerung/Regelung eines Klebstoffniveaus zum Beleimen von streifenförmigen Bahnen und/oder Werkstücken.

Bei zahlreichen industriellen Herstellungsverfahren kommen Klebstoffe, Dichtmassen oder sonstige flüssige oder teilflüssige Materialien zur Anwendung, welche auf ein Werkstück aufgetragen beziehungsweise zur flächigen Beschichtung des Werkstückes aufgebracht werden müssen. Die hierzu verwendeten Vorrichtungen setzen sich beispielsweise aus einem Bevorratungsbehälter zur Aufnahme einer Flüssigkeit, beispielsweise eines Klebstoffes, und einer Dosiervorrichtung zusammen. Die Dosiervorrichtung kann beispielsweise aus einer Walze bestehen, wobei der auszubringende Klebstoff über einen dünnen Auslassspalt gleichmäßig auf die Walze aufgetragen und somit eine gleichmäßige Beschichtung des Werkstückes ermöglichen kann. Eine weitere Art der Ausbringung des Klebstoffes kann beispielsweise über Pinsel- beziehungsweise Flächenabstreifvorrichtungen erfolgen.

Damit während des Produktionsprozesses immer ausreichend Klebstoff im Bevorratungsbehälter vorhanden ist, wird der Klebstoff in seinem Füllstandsniveau des Behälters mittels eines Sensors /Gebers überwacht.
Zur Überwachung eines Füllstandsniveaus für Bevorratungsbehälter kommen heutzutage beispielsweise optische Überwachungssensoren zum Einsatz, welche auf optischem Wege (Berechnung der Lichtlaufzeit) den Abstand des Sensors zum Füllstandsniveau ermitteln. Ein weitere Möglichkeit zum Sensieren des Füllstandsniveaus kann darin bestehen, dass, ähnlich wie bei Tanküberwachungen, Schwimmer mit einem mechanischen Verbindungsgestänge mit einer Auswerteeinheit verwendet werden oder in das Füllstandsniveau eintauchende widerstandsabhängige Geber zum Einsatz kommen. Hierbei wird entsprechend des Füllstandsniveaus der spezifische Widerstand so verändert, dass in einer Auswerteeinheit eine Aussage über das Füllstandsniveau getroffen werden kann. Selbstverständlich ist es möglich, dass derartige Sensoren/Geber kaskadenförmig mit unterschiedlichen in das Bevorratungsgefäß hineinragenden Positionen eingebaut sein können. Bei absinkendem Klebstoffniveau werden somit Stufe für Stufe zuvor eingetauchte Sensoren vom umgebenden Klebstoff befreit, womit in grober Auswertung eine Aussage über das momentane Füllstandsniveau möglich wird.

Außer den optischen und den widerstandsspezifischen Füllstandsmesssensoren/Gebern sind noch weitere Füllstandsverfahren bekannt, bei denen der Abstand zwischen dem Sensor/Geber und dem Füllstandsniveau mittels Ultraschall und der daraus auswertbaren Laufzeitberechnung ermittelt werden können. Auch sind Systeme bekannt, bei denen ein in ein Füllstandsniveau eintauchender Sensor in Schwingungen versetzt wird, wobei entsprechend der Eintauchtiefe unterschiedliche Resonanzschwingungen gemessen werden können. Dieses Verfahren zeigt jedoch Nachteile darin, dass die zur Füllstandsaussage notwendigen Resonanzschwingungen abhängig von der Dichte des Klebstoffes beeinflusst werden.

So ist zum Beispiel aus der DE 26 52 133 A1 eine Vorrichtung zum Aufträgen von Leim auf Gegenstände bekannt, und zwar insbesondere auf die Stoßflächen von Blätterstapeln, Buchrücken, mit einer drehbaren Leimauftragwalze, die in einem Leimreservoir mit Leim benetzt wird und mit an der Mantelfläche der Leimauftragwalze wirksamen Abstreifern am Ein- und Auslauf des Leimreservoirs, bei der dem Leimreservoir eine Niveaureguliereinrichtung zum Aufrechterhalten eines Leimniveaus mit freiem oberem Leimspiegel zugeordnet ist, und bei der die Leimauftragwalze von oben her in den Leimvorrat hineinragt. Diese Niveaureguliereinrichtung ist dort zum Beispiel ein im Leimreservoir vorgesehener - elektrischer, elektromechanischer oder anders ausgestalteter - Fühler, der die Leimzufuhr regelt und dazu die Höhe des Leimspiegels in diesem Reservoir abfühlt.
Um bei all diesen Verfahren zur Ermittlung eines Füllstandsniveaus verfeinerte Aussagen treffen zu können, werden unter anderem Sensoren eingesetzt, welche in das Füllstandsniveau eintauchen und entsprechend einer zuvor kalibrierten Eintauchtiefe einen aussagekräftigen Messwert bereitstellen. Um hierbei Veränderungen des Füllstandsniveaus ermitteln zu können, wird der gesamte in den Klebstoff eingetauchte Sensor entsprechend seiner kalibrierten Eintauchtiefe in oder aus den Füllstandsbehälter bewegend nachgeführt. Somit ergibt sich die tatsächliche Identifikation des Füllstandsniveaus dadurch, dass die Lageposition des Sensors innerhalb des Behälters ermittelt wird.

Die vorliegende Erfindung beschäftigt sich mit dem Problem, eine Vorrichtung und ein Verfahren zur Steuerung/Regelung eines Füllstandsniveaus der eingangs genannten Art anzugeben, das sich insbesondere dadurch auszeichnet, dass mittels eines Sensors vergleichsweise einfach und schnell mit großer Genauigkeit bei bereits geringen Füllstandsänderungen berührungslos oder berührend ein Füllstandsniveau ermittelt werden kann.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Füllstandsniveau eines Klebstoffes innerhalb eines Bevorratungsbehälters schnell in einfacher aber sehr präziser Weise zu ermitteln, um entsprechend des Produktionsprozesses geforderte Klebstoffmengen bereitstellen zu können. Hierbei ist es insbesondere wichtig, bei verändernden zu beschichtenden Werkstücken, beispielsweise bei dem Wechsel der Klebstoffbeschichtung von streifenförmigen Bereichen auf großflächige Bereiche von Werkstücken eine größere Menge von Klebstoff rechtzeitig und schnell genug bereitstellen zu können. Da derartige Wechsel beziehungsweise ein vorheriger Stillstand der Maschine in der Regel lange Aufwärmphasen des Klebstoffes innerhalb des Bevorratungsbehälters erfordern, ist es vorteilhaft, immer nur die Menge Klebstoff vorzuhalten, die tatsächlich für den derzeitigen beziehungsweise gewünschten Beschichtungsablauf notwendig ist. Um derartige Klebstoffe, bei denen es sich um Schmelzklebstoffe handelt, verflüssigen zu können, wird außer einer langen Aufwärmzeit auch viel Energie benötigt, was durchaus zu langen und unproduktiven Wartezeiten und kostenintensiven Vorbereitungsphasen führt.

Um diese Nachteile zu beseitigen ist ein Füllstandssensor vorgesehen, welcher auf kapazitive Weise funktioniert. Dieser kapazitive Sensor kann dabei mit einem Ende in den Klebstoff eingetaucht werden oder mit seinem Ende vom Füllstandsniveau des Klebstoffes beabstandet positioniert sein. Wird nun ein zuvor verfestigter Klebstoff innerhalb des Bevorratungsbehälters mittels einer Heizvorrichtung verflüssigt, kann der Klebstoff über eine Dosiervorrichtung, bestehend beispielsweise aus einer Walze, auf ein flächiges Werkstück oder eine streifenförmige Bahn oder Fläche aufgetragen werden. Da bei dieser Ausbringung eines Klebstoffes das Klebstoffniveau verringert wird, ermittelt der Sensor entsprechend seiner Eintauchtiefe oder entsprechend dem vom Klebstoff beabstandeten Maß über ein veränderbares elektrisches Feld dieses sich verändernde Klebstoffniveau. Unabhängig ob der Sensor in das Klebstoffniveau eintaucht oder von diesem beabstandet positioniert ist, ergeben sich je nach Eintauchtiefe beziehungsweise Beabstandung zum Füllstandsniveau verändernde elektrische Felder, die entsprechend durch eine Auswerteeinheit ermittelt und aufbereitet werden können. Die somit dem Füllstandsniveau entsprechenden Messwerte ermöglichen es nun, durch geeignete Dosierventile beziehungsweise Füllvorrichtungen ausreichend Klebstoff für das zu beschichtende Werkstück in den Bevorratungsbehälter nachzufüllen. Auch wird es auf diese Weise möglich, bei Beendigung eines Arbeitsprozesses das Klebstoffniveau so weit absinken zu lassen, dass eine minimale Klebstoffrestmenge durch schnelles Aufheizen schnell wieder verflüssigt werden kann. Somit werden Vorbereitungszeiten während dem Aufschmelzen des Klebstoffes und auch die hierzu benötigte Heizenergie erheblich reduziert.

Selbstverständlich ist es möglich, dass der in den Behälter ragende Sensor in seiner Position verstellbar ist, wobei diese Verstellung beispielsweise über einen Schiebemechanismus erfolgen kann. Die Betätigung der Verstellung dieses Sensors kann sowohl mechanisch von Hand beziehungsweise elektromotorisch von Hand oder automatisch erfolgen. Eine derartige Verstellung ist immer dann von Vorteil, wenn entsprechend des verwendeten Klebstoffes/Flüssigkeit die Änderung des Messfeldes des Sensors nur geringe Änderungen erfährt und daher der Sensor in den Bevorratungsbehälter nachgeführt beziehungsweise herausbewegt werden können soll.

Abhängig von der Form des Bevorratungsgefäßes und des Verbrauches des Klebstoffes ist es denkbar, dass mehrere gestufte und überlappend angeordnete erfindungsgemäße Sensoren, entsprechend der vorgenannten Art zum Einsatz kommen. Hierbei deckt ein jeder der verwendeten Sensoren einen bestimmten Füllstandsbereich ab, wobei diese Sensoren in regelmäßigen Abständen angeordnet oder in unregelmäßigen Abständen zueinander positioniert sein können. Die Änderungen des elektrischen Feldes des kapazitiven Sensors können unabhängig von einer möglichen Eintauchtiefe beziehungsweise Beabstandung zum Füllstandsniveau kontinuierlich erfolgen. Auch ist es denkbar, dass bei einem hohen Füllstandsniveau in einer ersten Phase die Änderungen des kapazitiven Sensorfeldes entsprechend eines Kennfeldes mit großen Stufungen ausgewertet wird und bei sich beispielsweise zur Dosiervorrichtung verjüngenden Füllstandsbehälter ein schnell abnehmendes Füllstandsniveau mit feineren gestuften Auswerteschritten verarbeitet wird. Die Änderungen des elektrischen Feldes des kapazitiven Sensors können somit gleichmäßig oder ungleichmäßig ausgebildet sein.

Wie zuvor im Stand der Technik beschrieben, ist es auch hier denkbar, dass der kapazitive Sensor die Funktion einer Feindetektierung des Füllstandsniveaus übernimmt und der gesamte Sensor bei entsprechend abnehmendem Füllstandsniveau zusätzlich in den Bevorratungsbehälter hinein bewegt werden kann.

Bei steigendem Füllstandsniveau wird der gesamte Füllstandssensor entsprechend vice versa bewegt, so dass das kapazitive Feld permanent als Feindetektor fungiert. Die grobe Identifikation des Füllstandsniveaus wird dabei durch das Hinein- oder Hinausbewegen des Sensors aus dem Füllstandsbehälter ermittelt

Zur Erzeugung des kapazitiven Feldes kann der in den Klebstoff eintauchende Sensor beziehungsweise vom Klebstoff beabstandete Sensor durch zwei konzentrisch angeordnete Elektroden gebildet werden, bei dem eine erste Elektrode, beispielsweise rohrförmig eine zweite, stabförmige, innere Elektrode umgreift. Zur Erzeugung des kapazitiven Feldes ist es notwendig, dass die Elektroden zueinander galvanisch getrennt positioniert sind. Hierbei ist es vorteilhaft, wenn die äußere Elektrode rohrförmig ausgebildet ist, da somit ein gleichmäßiges homogenes kapazitives Feld entsteht, was bei der Verwendung eckiger Rohre nicht der Fall sein kann. Um einen direkten Kontakt der äußeren Elektrode beispielsweise mit dem Klebstoff zu vermeiden, ist diese in einem rohrförmigen Gehäuse mit geschlossenem Boden eingebracht, wobei die innere Elektrode konzentrisch innerhalb der rohrförmigen Elektrode positioniert ist. Beide Elektroden berühren sich nicht und sind beispielsweise durch eine Luftspalt voneinander beabstandet. Hierbei ist es möglich, dass der Luftspalt mit einem zusätzlich isolierenden Werkstoff oder einer isolierenden Flüssigkeit gefüllt sein kann, wobei es vorteilhaft ist, wenn dieser Bereich zwischen den Elektroden beispielsweise über eine eigene Heizung zur Anpassung und Angleichung der Sensortemperatur an die Klebstofftemperatur ausgestattet ist. In einer weiteren Variante ist es denkbar, dass dieser Luftspalt mit einem das elektrische Feld verstärkenden Werkstoff oder Flüssigkeit ausgefüllt ist. Mittels derartiger Maßnahmen lässt sich der Sensor auf den Klebstoff beziehungsweise die auszubringende Flüssigkeit abgleichen, wobei die beiden verwendeten Elektroden aus gleichen oder unterschiedlichen Werkstoffen bestehen können.

Um Einstellarbeiten des in den Bevorratungsbehälter hineinragenden Sensors zu vereinfachen beziehungsweise schnell durchführen zu können, kann der Sensor an seinem Gehäuse einen Anschlag aufweisen, der eine einfache Positionierung des Sensors zum Bevorratungsbehälter ermöglicht. Weiterhin kann dieser Anschlag auch zur Sicherung und somit zur maximalen Einfahr- beziehungsweise Eintauchtiefe des Sensors in den Bevorratungsbehälter dienen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Bevorratungsbehälter für Klebstoff mit Dosiervorrichtung und Sensor zur Überwachung des Füllstandes"
- Fig. 2: einen Sensor zur Überwachung eines Füllstands in ein Füllstands-niveau eingetaucht.

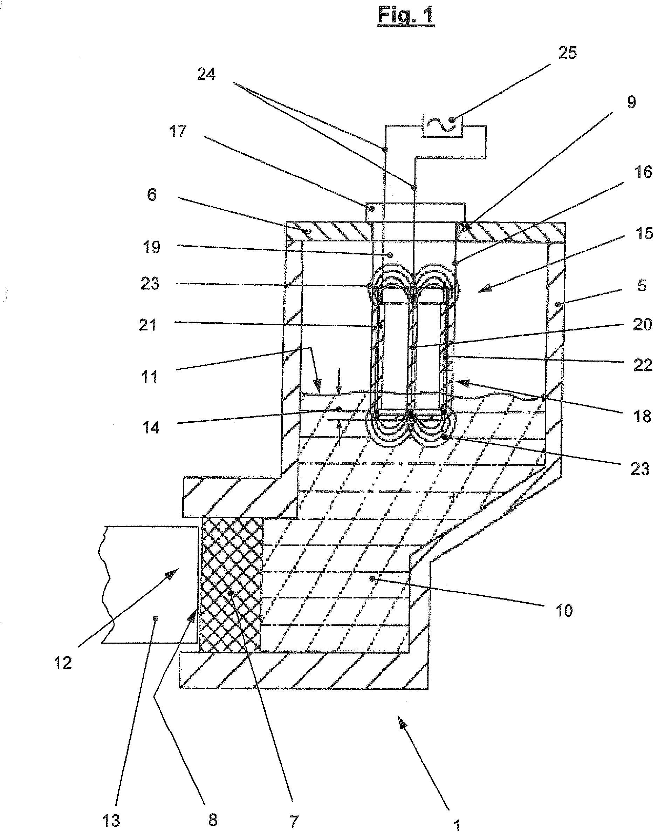

Figur 1 zeigt einen Bevorratungsbehälter 5 für Klebstoff 10 mit Dosiervorrichtung 12 und Sensor 15 zur Überwachung eines Füllstandniveaus 11. Der Bevorratungsbehälter 5 weist hierbei ein Bevorratungsvolumen auf, welches an seiner unteren Gehäuseseite in einer Auftragsvorrichtung 1 endet. Der Klebstoff 10 benetzt hierbei den rückseitigen Bereich einer Walze 7 einer Dosiervorrichtung 12, wobei die dem Klebstoff 10 abgewandte Seite der Walze 7 die Austrittsöffnung 8 zum Werkstück 13 darstellt. An seinem der Auftragsvorrichtung 1 entgegen gesetzten Ende des Behälters 5 ist der Behälter 5 mittels eines Deckels 6 verschlossen. An geeigneter Position des Deckels 6 weist dieser eine Öffnung 9 auf, durch die ein Sensor 15 in den Behälter 5 eingeführt ist. Hierbei ragt der Sensor 15 beispielsweise mit einer Eintauchtiefe 14 in das Klebstoffniveau 11 des Klebstoffes 10 hinein, wobei der in das Klebstoffniveau 11 eintauchende Sensorbereich aus einem rohrförmigen Gehäuse 18 besteht. An seiner dem Deckel 6 zugewandten Ende des Sensors 15 ist dieser mit einem Gehäuse 16 ausgebildet, welches durch die Öffnung 9 ragt und mittels eines Anschlages 17 in seiner Einragtiefe in den Behälter 5 begrenzt werden kann. Die innerhalb des rohrförmigen Gehäuses 18 angeordneten Elektroden 20, 21 sind über elektrische Leitungen 24 mit einer Steuerung 25 beziehungsweise Regelung 25 verbunden. Mit dieser Steuerung 25 beziehungsweise Regelung 25 wird das Klebstoffniveau 11 ermittelt und ausgewertet.

In einer weiteren Ausführung ist der in den Behälter 5 einragende Sensor 15 vom Klebstoffniveau 11 mit seinem Ende des rohrförmigen Gehäuses 18 beabstandet positioniert, so dass keine Benetzung des Sensors 15 mit dem Klebstoff 10 entsteht. Hierbei ändert sich das elektrische Feld 23, dass zuvor durch die Eintauchtiefe 14 verändert wird, durch den Abstand zwischen dem unteren Ende des Sensors 15 und des Klebstoffniveaus 11. Entsprechend der Beschaffenheit und Zusammensetzung des Klebstoffes 10 hat dieser eine verändernde Wirkung auf das elektrische Feld 23, so dass bei abnehmendem Klebstoffniveau 11 über die Steuerung/Regelung 25 eine Auswertung des tatsächlichen Klebstoffniveaus 11 des Behälters 5 ermöglicht wird.

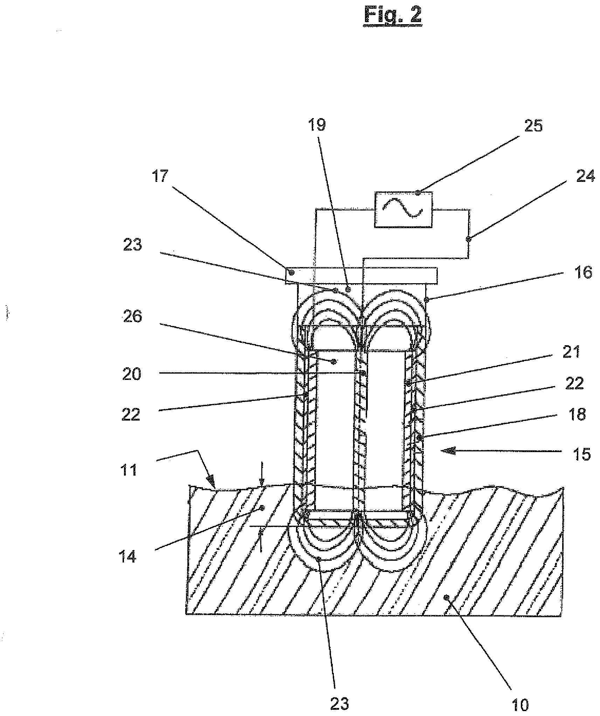

Aus der Figur 2 ist der Aufbau des Sensors 15 in eingetauchtem Zustand innerhalb des Klebstoffes 10 dargestellt Wie zuvor in Figur 1 beschrieben, ändert sich das elektrische Feld 23 entsprechend der Eintauchtiefe des Sensors 15, wobei das rohrförmige Gehäuse 18 des Sensors 15 im Eintauchbereich als geschlossene Topfform ausgebildet ist. Es somit nicht möglich, dass Klebstoff in den Sensor 15 eindringen kann. Innerhalb des rohrförmigen Gehäuses 18 ist eine rohrförmige Elektrode 21 mittels eines Isolators 22 beabstandet zum rohrförmigen Gehäuse 18 eingebracht. Der Isolator 22 kann rein isolierend, aber auch zusätzlich das elektrische Feld 23 verstärkende Eigenschaften aufweisen. In konzentrischer Position des Sensors 15 ist eine Elektrode 20, vorzugsweise stabförmige Elektrode zur Elektrode 21 beabstandet eingebracht. Die Beabstandung wird durch einen Luftspalt 26 gebildet, der entsprechend des zu verwendenden Klebstoffes 10 auch mit einem das elektrische Feld 23 verstärkenden Material aufgefüllt sein kann. Hierbei ist dieses Material allerdings als Isolator zwischen der Elektrode 20 und der Elektrode 21 wirkend.
An seinem dem Klebstoffniveau 11 entgegen gesetzten Ende des Sensors 15 ist dieser mit einem Gehäuse 16 ausgebildet, wobei durch das Gehäuse 16 elektrische Leitungen 24 zur Steuerung/Regelung 25 geleitet werden. Dieser obere Bereich des Gehäuses 16 bildet das Kopfteil 19, welcher durch einen Anschlag 17 begrenzt wird. Entsprechend der Länge und Ausbildung des Kopfteils 19, kann der Sensor 15 in seiner Position innerhalb des Bevorratungsbehälters 5 verschoben werden. Diese Verschiebbarkeit wird durch den Anschlag 17 mit einer maximalen Einragtiefe des Sensors 15 begrenzt.

### Bezugszeichenliste

- 1: Auftragsvorrichtung
- 5: Behälter, Bevorratungsbehälter
- 6: Deckel
- 7: Walze
- 8: Austrittsöffnung
- 9: Öffnung
- 10: Klebstoff, Leim, Flüssigkeit
- 11: Klebstoffniveau, Füllstandsniveau
- 12: Dosiervorrichtung
- 13: Werkstück, streifenförmige Bahn
- 14: Eintauchtiefe
- 15: Sensor
- 16: Gehäuse
- 17: Anschlag
- 18: rohrförmiges Gehäuse
- 19: Kopfteil
- 20: Elektrode 1, stabförmige Elektrode 1
- 21: Elektrode 2, stabförmige Elektrode 2
- 22: Isolator
- 23: elektrisches Feld
- 24: elektrische Leitungen
- 25: Steuerung, Regelung
- 26: Luftspalt

## Patentansprüche

1. Verfahren zum Betreiben einer Vorrichtung gemäß Anspruch 7,
**dadurch gekennzeichnet,**
- **dass** der mit einem Ende in den Klebstoff (10) eintauchende Sensor (15) entsprechend der Eintauchtiefe (14) oder das vom Klebstoff (10) beabstandete Ende des Sensors (15) entsprechend dem Abstand zum Klebstoff (10) ein veränderbares elektrisches Feld (23) aufweist,
- **dass** das veränderbare elektrische Feld (23) von einer Steuerung/Regelung (25) zur Aufrechterhaltung eines vorgegebenen Klebstoffniveaus (11) und entsprechender Befüllung des Behälters (5) erfasst und ausgewertet wird.

2. Verfahren zur Steuerung/Regelung eines Füllstandsniveaus (11) nach Anspruch 1, **dadurch gekennzeichnet,**
**dass** der in den Behälter (5) ragende Sensor (15) in seiner Position verstellbar ist.

3. Verfahren zur Steuerung/Regelung eines Füllstandsniveaus (11) nach Anspruch 1, **dadurch gekennzeichnet,**
**dass** der in den Behälter (5) einragender Sensor (15) in Richtung zum Klebstoff (10) aus mehreren gestuften und überlappend angeordneten einzelnen Sensoren (15) besteht.

4. Verfahren zur Steuerung/Regelung eines Füllstandsniveaus (11) nach den Ansprüchen 1 bis 3, **dadurch gekennzeichnet,**
**dass** die Änderungen des elektrischen Feldes (23) entsprechend der Eintauchtiefe (14) des Sensors (15) in den Klebstoff (10) oder vom Abstand des Sensors (15) zum Klebstoff (10) kontinuierlich erfolgen.

5. Verfahren zur Steuerung/Regelung eines Füllstandsniveaus (11) nach den Ansprüchen 1 bis 3, **dadurch gekennzeichnet,**
**dass** die Änderungen des elektrischen Feldes (23) entsprechend der Eintauchtiefe (14) des Sensors (15) in den Klebstoff (10) oder vom Abstand des Sensors (15) zum Klebstoff (10) gestuft erfolgen und eine jede stufenförmige Änderung einem Klebstoffniveau (11) entspricht.

6. Verfahren zur Steuerung/Regelung eines Füllstandsniveaus (11) nach Anspruch 5, **dadurch gekennzeichnet,**
**dass** die stufenförmigen Änderungen des elektrischen Feldes (23) in nicht gleichgroßen Stufungen ausgebildet sind.

7. Vorrichtung zur Steuerung/Regelung eines Füllstandsniveaus (11), insbesondere zur Regelung eines Klebstoffniveaus (11) zum Beleimen von streifenförmigen Bahnen oder Flächen (13) und/oder Werkstücken (13),
- mit einer Dosiervorrichtung (12) zur Ausbringung eines Klebstoffs (10),
- wobei der Klebstoff (10) aus einem Behälter (5) mittels einer Walze (7) auf das Werkstück (13) oder eine streifenförmige Bahn oder Fläche (13) aufgetragen wird,
- wobei in den Behälter (5) ein Sensor (15) ragt, der mit einem Ende in den Klebstoff (10) eintaucht oder mit seinem in den Behälter ragenden Ende vom Klebstoff (10) beabstandet positioniert ist,
**dadurch gekennzeichnet,**
- **dass** der Sensor (15) durch eine in einem Gehäuse (18) angeordnete Elektrode 2 (21) und eine innerhalb zur Elektrode 2 (21) angeordnete Elektrode 1 (20) gebildet wird, welches im Eintauchbereich rohrförmig mit geschlossenem Boden ausgebildet ist, so dass der Sensor eingerichtet ist, in das Klebstoffniveau einzutauchen, und
- **dass** die Elektrode 1 (20) von der Elektrode 2 (21) galvanisch getrennt positioniert ist, und
- **dass**, unabhängig ob der Sensor in das Füllstandsniveau eintaucht oder von diesem beabstandet positioniert ist, sich je nach Eintauchtiefe oder Beabstandung zum Füllstandsniveau veränderte elektrische Felder ergeben, die durch eine Auswerteeinheit ermittelt und aufbereitet werden.

8. Vorrichtung zur Steuerung/Regelung eines Füllstandsniveaus (11) nach Anspruch 7, **dadurch gekennzeichnet,**
**dass** das Gehäuse (18) und die Elektrode 2 (21) rohrförmig ausgebildet sind.

9. Vorrichtung zur Steuerung/Regelung eines Füllstandsniveaus (11) nach den Ansprüchen 7 und 8, **dadurch gekennzeichnet,**
**dass** die Elektrode 1 (20) konzentrisch zur Elektrode 2 (21) angeordnet ist.

10. Vorrichtung zur Steuerung/Regelung eines Füllstandsniveaus (11) nach Anspruch 7, **dadurch gekennzeichnet,**
**dass** zwischen dem Gehäuse (18) und der Elektrode 2 (21) ein Isolator (22) vorgesehen ist.

11. Vorrichtung zur Steuerung/Regelung eines Füllstandsniveaus (11) nach Anspruch 7, **dadurch gekennzeichnet,**
**dass** das Gehäuse (18) des Sensors (15) an seinem dem Klebstoff (10) zugewandten Ende verschlossen ausgeführt ist.

12. Vorrichtung zur Steuerung/Regelung eines Füllstandsniveaus (11) nach einem der Ansprüche 7 bis 11, **dadurch gekennzeichnet,**
**dass** zwischen der Elektrode 2 (21) und der Elektrode 1 (20) ein Luftspalt (26) besteht.

13. Vorrichtung zur Steuerung/Regelung eines Füllstandsniveaus (11) nach Anspruch 12, **dadurch gekennzeichnet,**
**dass** der Luftspalt (26) zwischen der Elektrode 2 (21) und der Elektrode 1 (20) mit einem isolierenden Werkstoff oder Flüssigkeit ausgefüllt ist.

14. Vorrichtung zur Steuerung/Regelung eines Füllstandsniveaus (11) nach Anspruch 12, **dadurch gekennzeichnet,**
**dass** der Luftspalt (26) zwischen der Elektrode 2 (21) und der Elektrode 1 (20) mit einem das elektrische Feld (23) verstärkenden Werkstoff oder Flüssigkeit ausgefüllt ist.

15. Vorrichtung zur Steuerung/Regelung eines Füllstandsniveaus (11) nach einem der Ansprüche 7 bis 14, **dadurch gekennzeichnet,**
**dass** die Elektrode 2 (21) und die Elektrode 1 (20) aus gleichen Werkstoffen bestehen.

16. Vorrichtung zur Steuerung/Regelung eines Füllstandsniveaus (11) nach einem der Ansprüche 7 bis 15, **dadurch gekennzeichnet,**
**dass** zur Verstellung der Einragtiefe des Sensors (15) in das Gehäuse (5) der Anschlag (17) zum Gehäuse (16) des Sensors (15) verstellbar ausgeführt ist.

## Claims

1. Method for operating a device according to claim 7, **characterised in that**
- the sensor (15), one end of which is immersed in the adhesive (10), or the end of the sensor (15) that is spaced apart from the adhesive (10) comprises a variable electrical field (23) corresponding to the immersion depth (14) or corresponding to the distance from the adhesive (10), respectively,
- the variable electrical field (23) is detected and evaluated by an open-loop/closed-loop control system (25) for maintaining a predefined adhesive level (11) and correspondingly filling the container (5).

2. Method for controlling a fill level (11) in an open-loop/closed-loop manner according to claim 1, **characterised in that**
the sensor (15) projecting into the container (5) can be adjusted in terms of its position.

3. Method for controlling a fill level (11) in an open-loop/closed-loop manner according to claim 1, **characterised in that**
the sensor (15) projecting into the container (5) towards the adhesive (10) consists of a plurality of stepped individual sensors (15) arranged so as to overlap with one another.

4. Method for controlling a fill level (11) in an open-loop/closed-loop manner according to claims 1 to 3, **characterised in that**
the variations of the electrical field (23) in accordance with the immersion depth (14) of the sensor (15) in the adhesive (10) or in accordance with the distance between the sensor (15) and the adhesive (10) occur in a continuous manner.

5. Method for controlling a fill level (11) in an open-loop/closed-loop manner according to claims 1 to 3, **characterised in that**
the variations of the electrical field (23) in accordance with the immersion depth (14) of the sensor (15) in the adhesive (10) or in accordance with the distance between the sensor (15) and the adhesive (10) occurs in a stepped manner and any stepped variation corresponds to an adhesive level (11).

6. Method for controlling a fill level (11) in an open-loop/closed-loop manner according to claim 5, **characterised in that**
the stepped variations of the electrical field (23) are in the form of unequal steps.

7. Device for controlling a fill level (11) in an open-loop/closed-loop manner, in particular for controlling an adhesive level (11) in a closed-loop manner for applying adhesive to strip-shaped webs or surfaces (13) and/or workpieces (13),
- comprising a dosing device (12) for dispensing an adhesive (10),
- the adhesive (10) being applied to the workpiece (13) or a strip-shaped web or surface (13) from a container (5) by means of a roller (7),
- a sensor (15) projecting into the container (5), one end of which sensor is immersed in the adhesive (10) or the end of which sensor that projects into the container is spaced apart from the adhesive (10),
**characterised in that**
- the sensor (15) is formed of an electrode 2 (21) arranged in a housing (18) and an electrode 1 (20) arranged inside the electrode 2 (21), which electrode 1 is designed to be tubular with a closed base in the immersion region such that the sensor is configured to be immersed in the adhesive level, and
- the electrode 1 (20) is positioned so as to be galvanically isolated from the electrode 2 (21), and
- regardless of whether the sensor is immersed in the fill level or is spaced apart therefrom, electrical fields are produced that vary depending on the immersion depth or distance from the fill level and that are identified and processed by means of an evaluation unit.

8. Device for controlling a fill level (11) in an open-loop/closed-loop manner according to claim 7, **characterised in that**
the housing (18) and the electrode 2 (21) are designed to be tubular.

9. Device for controlling a fill level (11) in an open-loop/closed-loop manner according to claims 7 and 8, **characterised in that**
the electrode 1 (20) is arranged concentrically with respect to the electrode 2 (21).

10. Device for controlling a fill level (11) in an open-loop/closed-loop manner according to claim 7, **characterised in that**
an insulator (22) is provided between the housing (18) and the electrode 2 (21).

11. Device for controlling a fill level (11) in an open-loop/closed-loop manner according to claim 7, **characterised in that**
the housing (18) of the sensor (15) is designed to be closed on the end thereof facing the adhesive (10).

12. Device for controlling a fill level (11) in an open-loop/closed-loop manner according to any of claims 7 to 11, **characterised in that**
there is an air gap (26) between the electrode 2 (21) and the electrode 1 (20).

13. Device for controlling a fill level (11) in an open-loop/closed-loop manner according to claim 12, **characterised in that**
the air gap (26) between the electrode 2 (21) and the electrode 1 (20) is filled with an insulating material or liquid.

14. Device for controlling a fill level (11) in an open-loop/closed-loop manner according to claim 12, **characterised in that**
the air gap (26) between the electrode 2 (21) and the electrode 1 (20) is filled with a material or liquid that amplifies the electrical field (23).

15. Device for controlling a fill level (11) in an open-loop/closed-loop manner according to any of claims 7 to 14, **characterised in that**
the electrode 2 (21) and the electrode 1 (20) consist of the same materials.

16. Device for controlling a fill level (11) in an open-loop/closed-loop manner according to any of claims 7 to 15, **characterised in that**
the stop (17) is designed to be adjustable with respect to the housing (16) of the sensor (15) in order to adjust the projection depth of the sensor (15) into the housing (5).

## Revendications

1. Procédé de fonctionnement d'un dispositif selon la revendication 7,
**caractérisé en ce que**
- le capteur (15) s'enfonçant avec une extrémité dans la matière adhésive (10) présente un champ électrique variable (23) correspondant à de la profondeur d'enfoncement (14) ou l'extrémité du capteur (15) distante de la matière adhésive (10) présente un champ électrique variable correspondant à la distance à la matière adhésive (10),
- le champ électrique variable (23) est détecté et évalué par une commande/régulation (25) en vue du maintien d'un niveau de matière adhésive prédéterminé (11) et d'un remplissage correspondant du récipient (5).

2. Procédé de commande/régulation d'un niveau de remplissage (11) selon la revendication 1, **caractérisé en ce que**
le capteur (15) dépassant dans le récipient (5) peut être réglé dans sa position.

3. Procédé de commande/régulation d'un niveau de remplissage (11) selon la revendication 1, **caractérisé en ce que**
le capteur (15) dépassant à l'intérieur du récipient (5) en direction de la matière adhésive (10) consiste en plusieurs capteurs (15) individuels échelonnés et agencés de manière à se chevaucher.

4. Procédé de commande/régulation d'un niveau de remplissage (11) selon les revendications 1 à 3, **caractérisé en ce que**
les variations du champ électrique (23) correspondant à la profondeur d'enfoncement (14) du capteur (15) dans la matière adhésive (10) ou à la distance du capteur (15) à la matière adhésive (10) s'effectuent de manière continue.

5. Procédé de commande/régulation d'un niveau de remplissage (11) selon les revendications 1 à 3, **caractérisé en ce que**
les variations du champ électrique (23) correspondant à la profondeur d'enfoncement (14) du capteur (15) dans la matière adhésive (10) ou à la distance du capteur (15) à la matière adhésive (10) s'effectuent de manière échelonnée et chaque variation en échelon correspond à un niveau de matière adhésive (11).

6. Procédé de commande/régulation d'un niveau de remplissage (11) selon la revendication 5, **caractérisé en ce que**
les variations échelonnées du champ électrique (23) sont réalisées selon des échelons qui ne sont pas de même grandeur.

7. Dispositif de commande/régulation d'un niveau de remplissage (11), en particulier en vue de la régulation d'un niveau de matière adhésive (11) afin d'encoller des bandes ou surfaces (13) en forme de rubans et/ou des pièces (13),
- avec un dispositif doseur (12) pour faire sortir une matière adhésive (10),
- dans lequel la matière adhésive (10) est appliquée à partir d'un récipient (5) au moyen d'un rouleau (7) sur la pièce (13) ou une bande ou surface (13) en forme de ruban,
- dans lequel dépasse dans le récipient (5) un capteur (15) qui s'enfonce avec une extrémité dans la matière adhésive (10) ou qui est positionné avec son extrémité dépassant dans le récipient à distance de la matière adhésive (10),
**caractérisé en ce que**
- le capteur (15) est formé par une électrode 2 (21) agencée dans un boîtier (18) et par une électrode 1 (20) agencée à l'intérieur de l'électrode 2 (21), laquelle est formée tubulaire dans la zone d'enfoncement, avec un fond fermé, de telle sorte que le capteur est installé de manière à s'enfoncer dans le niveau de matière adhésive, et
- l'électrode 1 (20) est positionnée de manière séparée galvaniquement de l'électrode 2 (21),
- indépendamment du fait que le capteur s'enfonce dans le niveau de remplissage ou est positionné à distance de celui-ci, des champs électriques variant en fonction de la profondeur d'enfoncement ou de la distance au niveau de remplissage, qui sont déterminés et traités par une unité d'évaluation, sont générés.

8. Dispositif de commande/régulation d'un niveau de remplissage (11) selon la revendication 7, **caractérisé en ce que**
le boîtier (18) et l'électrode 2 (21) sont réalisés tubulaires.

9. Dispositif de commande/régulation d'un niveau de remplissage (11) selon les revendications 7 et 8, **caractérisé en ce que**
l'électrode 1 (20) est agencée de manière concentrique par rapport à l'électrode 2 (21).

10. Dispositif de commande/régulation d'un niveau de remplissage (11) selon la revendication 7, **caractérisé en ce qu'**
un isolant (22) est prévu entre le boîtier (18) et l'électrode 2 (21).

11. Dispositif de commande/régulation d'un niveau de remplissage (11) selon la revendication 7, **caractérisé en ce que**
le boîtier (18) du capteur (15) est exécuté fermé au niveau de son extrémité tourné vers la matière adhésive (10).

12. Dispositif de commande/régulation d'un niveau de remplissage (11) selon l'une quelconque des revendications 7 à 11, **caractérisé en ce qu'**
un entrefer (26) existe entre l'électrode 2 (21) et l'électrode 1 (20).

13. Dispositif de commande/régulation d'un niveau de remplissage (11) selon la revendication 12, **caractérisé**
**en ce que** l'entrefer (26) entre l'électrode 2 (21) et l'électrode 1 (20) est rempli d'une matière isolante ou d'un liquide isolant.

14. Dispositif de commande/régulation d'un niveau de remplissage (11) selon la revendication 12, **caractérisé en ce que**
l'entrefer (26) entre l'électrode 2 (21) et l'électrode 1 (20) est rempli d'une matière ou liquide amplifiant le champ électrique (23).

15. Dispositif de commande/régulation d'un niveau de remplissage (11) selon l'une quelconque des revendications 7 à 14, **caractérisé en ce que**
l'électrode 2 (21) et l'électrode 1 (20) consistent en une matière identique.

16. Dispositif de commande/régulation d'un niveau de remplissage (11) selon l'une quelconque des revendications 7 à 15, **caractérisé en ce que**
pour régler la profondeur de dépassement du capteur (15) dans le boîtier (5), la butée (17) par rapport au boîtier (16) du capteur (15) est exécutée de manière réglable.
